# EUROPEAN PATENT APPLICATION

(11) **EP 1 460 365 A1**
(43) Date of publication of application: **22.09.2004**
(21) Application number: 02780113.3
(22) Date of filing: 15.11.2002
(51) Int. Cl.: F28D 7/02, F01N 5/02

(54) **HEAT EXCHANGER**

(30) Priority: 25.12.2001 JP 2001391093; 25.12.2001 JP 2001391135
(71) Applicant: Honda Giken Kogyo Kabushiki Kaisha, Minato-ku, Tokyo 107-8556 (JP)
(72) Inventor: KOMATSU, H., K. K. Honda Gijutsu Kenkyusho, Wako-shi, Saitama 351-0193 (JP); TANAKA, H., K. K. Honda Gijutsu Kenkyusho, Wako-shi, Saitama 351-0193 (JP); SHINOHARA, M., K. K. Honda Gijutsu Kenkyusho, Wako-shi, Saitama 351-0193 (JP); SAITO, B., K. K. Honda Gijutsu Kenkyusho, Wako-shi, Saitama 351-0193 (JP); IZUMI, H., K.K. Honda Gijutsu Kenkyusho, Wako-shi, Saitama 351-0193 (JP)
(74) Representative: Prechtel, Jörg, Dipl.-Phys. Dr.
(86) International application number: PCT/JP2002/011964
(87) International publication number: WO 2003/056265

(57) **Abstract**

There is provided an evaporator (23) disposed between an exhaust manifold (22) and an exhaust pipe (24), the evaporator (23) including, in sequence from the upstream side toward the downstream side, a first exhaust gas passage (56) having a third stage heat exchanger (H3), a second exhaust gas passage (55) having a second stage heat exchanger (H2), and a third exhaust gas passage (50) having a first stage heat exchanger (H1). Formed in the annular second exhaust gas passage (55) of the second stage heat exchanger (H2) is a spiral passage divided by a spiral heat transfer plate (68), and arranged in a spiral shape so as to follow the heat transfer plate (68) are a plurality of undulating heat transfer tubes (67) that are stacked out of phase. Increasing the exhaust gas passage length by the heat transfer plate (68) and agitating the flow of exhaust gas by the heat transfer tubes (67) enables the opportunity for contact of the exhaust gas with the heat transfer plate (68) and the heat transfer tubes (67) to be increased, thereby enhancing the heat exchange efficiency.

## Description

### FIELD OF THE INVENTION

The present invention relates to a heat exchanger that has a heat transfer member disposed so as to be in contact with a thermal fluid flowing within a thermal fluid passage while the temperature of the thermal fluid decreases, and that recovers the thermal energy of the thermal fluid with a heat-absorbing medium via the heat transfer member by making the heat-absorbing medium flow within the heat transfer member in a direction opposite to the flow of the thermal fluid. The present invention also relates to a heat exchanger that carries out heat exchange between a thermal fluid flowing through a thermal fluid passage formed in the interior of a casing and a heat-absorbing medium flowing within a heat transfer member disposed in the thermal fluid passage.

### BACKGROUND ART

Such a heat exchanger is known from Japanese Patent Application Laid-open No. 2001-207839 filed by the present applicant. This heat exchanger is an evaporator that generates high temperature, high pressure steam by heating, with the exhaust gas of an internal combustion engine, water flowing within a heat transfer member formed from a pipe member bent in a zigzag shape and a pipe member wound in a spiral shape, and ensures uniform heat transfer performance in all regions of the heat exchanger by increasing the heat transfer area density (heat transfer area/volume) toward the downstream side of the exhaust gas passage.

Furthermore, Japanese Patent Application Laid-open No. 6-300207 discloses an arrangement in which the cross-sectional area of a passage through which flows the combustion gas of a once-through boiler is decreased toward the downstream side so as to gradually increase the flow rate of the combustion gas and increase the overall amount of heat transfer of the boiler.

However, in the arrangement described in Japanese Patent Application Laid-open No. 2001-207839, in order to increase the heat transfer area density on the downstream side of the exhaust gas passage, it is necessary to mount a large number of spirally wound pipe members therein with high density, thus not only increasing the number of joints of the pipe members and thereby increasing the number of assembly steps, but also since the flow rate of water flowing through the pipe members easily varies from member to member, there is the possibility that the heat exchange efficiency might deteriorate or the pipe members might be heated while empty.

Furthermore, in the above-mentioned arrangement described in Japanese Patent Application Laid-open No. 2001-207839, a cylindrical dividing wall is provided via a microscopic gap inside a cylindrical casing forming an outer shell of the evaporator, and the spirally wound heat transfer member is brazed to an inner face of this dividing wall. Since the heat transfer member contributes only to an improvement of the rigidity of the dividing wall and cannot contribute to an improvement of the rigidity of the casing, it is therefore necessary to increase the thickness of the casing in order to ensure a required strength, and there is thus the problem of an increase in the weight of the casing.

Furthermore, in the above-mentioned arrangement described in Japanese Patent Application Laid-open No. 6-300207, since it is necessary to reduce the cross-sectional area on the downstream side of the passage through which the combustion gas flows, the overall shape of the boiler is greatly restricted, thus causing the problem that the degrees of freedom in the design are reduced.

### DISCLOSURE OF INVENTION

The present invention has been achieved under the above-mentioned circumstances, and it is a first object thereof to maximize the heat exchange efficiency of a heat exchanger. Furthermore, it is a second object of the present invention to ensure sufficient rigidity while lightening the weight by reducing the thickness of a casing of a heat exchanger.

In order to achieve the first object, in accordance with a first aspect of the present invention, there is proposed a heat exchanger that has a heat transfer member disposed so as to be in contact with a thermal fluid flowing within a thermal fluid passage while the temperature of the thermal fluid decreases, and that recovers the thermal energy of the thermal fluid with a heat-absorbing medium via the heat transfer member by making the heat-absorbing medium flow within the heat transfer member in a direction opposite to the flow of the thermal fluid, characterized in that the heat transfer member includes a guide member that deflects the flow of the thermal fluid, and a disturbing member that agitates the flow of the thermal fluid that has been deflected by the guide member.

In accordance with this arrangement, with regard to the heat exchanger that carries out heat exchange between the thermal fluid and the heat-absorbing medium, since the heat transfer member through which the heat-absorbing medium flows includes the guide member that deflects the flow of the thermal fluid and the disturbing member that agitates the flow of the thermal fluid that has been deflected by the guide member, by increasing the length of the thermal fluid passage so as to increase the contact area between the thermal fluid and the heat transfer member, and by increasing the opportunity for contact between the thermal fluid and the heat transfer member by the agitation, it is possible to increase the heat exchange efficiency by carrying out heat transfer effectively between the thermal fluid and the heat transfer member.

Furthermore, in order to achieve the first object, in accordance with a second aspect of the present invention, in addition to the first aspect, there is proposed a heat exchanger wherein the thermal fluid passage is divided, from the upstream side toward the downstream side in the direction of flow of the thermal fluid, into a high temperature region, a medium temperature region, and a low temperature region, the temperature and the flow rate of the thermal fluid gradually decrease while flowing from the high temperature region to the low temperature region through the medium temperature region, and the guide member and the disturbing member are disposed at least in the medium temperature region.

In accordance with this arrangement, since the guide member and the disturbing member are disposed in the medium temperature region of the thermal fluid, which is located in the middle of the thermal fluid passage along the direction of flow, as much as possible of the thermal energy that could not be recovered by the heat-absorbing medium in the upstream side high temperature region of the thermal fluid can be recovered on its downstream side in the medium temperature region, thereby improving the overall thermal energy recovery efficiency of the heat exchanger.

Moreover, in order to achieve the first object, in accordance with a third aspect of the present invention, in addition to the second aspect, there is proposed a heat exchanger wherein the passage cross-sectional area of the thermal fluid passage in the medium temperature region is constricted at the entrance thereof.

In accordance with this arrangement, since the passage cross-sectional area of the thermal fluid passage in the medium temperature region is constricted at the entrance thereof, it is possible to increase the flow rate of the thermal fluid flowing through the thermal fluid passage, thereby improving the heat exchange efficiency.

Furthermore, in order to achieve the first object, in accordance with a fourth aspect of the present invention, in addition to the second or third aspect, there is proposed a heat exchanger wherein the thermal fluid passage has an annular shape in the medium temperature region, the guide member is formed from a spiral heat transfer plate disposed within the annular thermal fluid passage, and the disturbing member is formed by winding a plurality of undulating heat transfer tubes in a spiral shape so as to follow the guide member, the plurality of undulating heat transfer tubes being stacked out of phase.

In accordance with this arrangement, since the guide member disposed in the annular thermal fluid passage in the medium temperature region is formed from the spiral heat transfer plate, the flow of thermal fluid can be deflected by employing a simple structure with a small number of components, and since the disturbing member is formed by winding the plurality of undulating heat transfer tubes, which are stacked out of phase, in the spiral shape so as to follow the guide member, not only is it possible to arrange the long heat transfer tube compactly in a confined space, thus increasing the heat transfer area density, but it is also possible to generate agitation in the flow of the thermal fluid effectively and increase the opportunity for contact with the heat transfer tube, thereby further improving the heat exchange efficiency.

Moreover, in order to achieve the first object, in accordance with a fifth aspect of the present invention, in addition to any one of the second to the fourth aspects, there is proposed a heat exchanger wherein the flow of thermal fluid through the high temperature region is laminar.

In accordance with this arrangement, since the flow of thermal fluid through the high temperature region is laminar, it is possible to minimize the pressure loss of the thermal fluid in the high temperature region.

Furthermore, in order to achieve the first object, in accordance with a sixth aspect of the present invention, in addition to any one of the second to the fifth aspects, there is proposed a heat exchanger wherein the medium temperature region is arranged so as to cover the radially outer side of the high temperature region, and the low temperature region is arranged so as to cover the radially outer side of the medium temperature region.

In accordance with this arrangement, since the high temperature region, the medium temperature region, and the low temperature region are arranged sequentially from the radially inner to outer sides of the heat exchanger, heat escaping radially outward from the high temperature region can be recovered in the medium temperature region, and heat escaping radially outward from the medium temperature region can be recovered in the low temperature region, thereby fully recovering the thermal energy of the thermal fluid.

Moreover, in order to achieve the first object, in accordance with a seventh aspect of the present invention, in addition to any one of the first to the sixth aspects, there is proposed a heat exchanger wherein the thermal fluid is exhaust gas of an internal combustion engine, and the heat exchanger is an evaporator that evaporates the heat-absorbing medium with the heat of the exhaust gas.

In accordance with this arrangement, by carrying out in the evaporator heat exchange between the heat-absorbing medium and the exhaust gas discharged by the internal combustion engine, the evaporator being the heat exchanger and the exhaust gas being the thermal fluid, high temperature, high pressure steam can be generated, thereby utilizing effectively waste heat of the internal combustion engine.

In the first to the seventh aspects, heat transfer tubes 61, 67, and 70 and a heat transfer plate 68 of an embodiment correspond to the heat transfer members of the present invention and, in particular, the heat transfer tube 67 and the heat transfer plate 68 correspond to the disturbing member and the guide member respectively of the present invention. Furthermore, first to third exhaust gas passages 56, 55, and 50 of the embodiment correspond to the thermal fluid passage of the present invention, and an evaporator 23 of the embodiment corresponds to the heat exchanger of the present invention.

Furthermore, in order to attain the second object, in accordance with an eighth aspect of the present invention, there is proposed a heat exchanger that carries out heat exchange between a thermal fluid flowing through a thermal fluid passage formed in the interior of a casing and a heat-absorbing medium flowing within heat transfer members disposed in the thermal fluid passage, characterized in that the heat transfer member positioned on the radially outermost side is fixed along an inner face of the casing.

In accordance with this arrangement, since the heat transfer member positioned on the radially outermost side is fixed along the inner face of the casing, in the interior of which the thermal fluid passage is formed, the casing and the heat transfer member reinforce each other to improve the rigidity, and the thickness of the casing can accordingly be reduced, thus enabling the weight to be lightened.

Furthermore, in order to attain the second object, in accordance with a ninth aspect of the present invention, in addition to the eighth aspect, there is proposed a heat exchanger wherein the thermal fluid passage formed along the inner face of the casing is in a downstream section in the direction of flow of the thermal fluid.

In accordance with this arrangement, since the thermal fluid passage in the downstream section in the direction of flow of the thermal fluid is formed along the inner face of the casing, the relatively low temperature thermal fluid that has carried out heat exchange fully with the heat-absorbing medium forms a heat-insulating layer along the inner face of the casing, thereby suppressing more effectively escape of heat from the casing to the outside.

Moreover, in order to attain the second object, in accordance with a tenth aspect of the present invention, in addition to the eighth or ninth aspect, there is proposed a heat exchanger wherein the heat transfer member fixed along the inner face of the casing is in an upstream section in the direction of flow of the heat-absorbing medium.

In accordance with this arrangement, since the heat transfer member in the upstream section in the direction of flow of the heat-absorbing medium is fixed along the inner face of the casing, the relatively low temperature heat-absorbing medium that has not yet fully carried out heat exchange with the thermal fluid forms a heat-insulating layer along the inner face of the casing, thereby suppressing more effectively escape of heat from the casing to the outside.

Furthermore, in order to attain the second object, in accordance with an eleventh aspect of the present invention, in addition to any one of the eighth to the tenth aspects, there is proposed a heat exchanger wherein an outer face of the heat transfer member, which is wound in a spiral shape having substantially the same diameter as that of the casing, is fixed along the inner face of the casing, which is formed in a cylindrical shape.

In accordance with this arrangement, since the spirally wound heat transfer member is fixed along the inner face of the cylindrical casing, it is possible to increase the strength against an external force compared with a case in which the casing has a flat face or the heat transfer member has a linear portion.

Moreover, in order to achieve the second object, in accordance with a twelfth aspect of the present invention, in addition to any one of the eighth to the eleventh aspects, there is proposed a heat exchanger wherein the thermal fluid is exhaust gas of an internal combustion engine, and the heat exchanger is an evaporator that evaporates the heat-absorbing medium with the heat of the exhaust gas.

In accordance with this arrangement, by carrying out in the evaporator heat exchange between the heat-absorbing medium and the exhaust gas discharged by the internal combustion engine, the evaporator being the heat exchanger and the exhaust gas being the thermal fluid, high temperature, high pressure steam can be generated, thereby utilizing effectively waste heat of the internal combustion engine.

In the eighth to the twelfth aspects, exhaust gas of the embodiment corresponds to the thermal fluid of the present invention, water of the embodiment corresponds to the heat-absorbing medium of the present invention, a center casing 31 of the embodiment corresponds to the casing of the present invention, the heat transfer tubes 61, 67, and 70 of the embodiment correspond to the heat transfer member of the present invention, and the first to third exhaust gas passages 56, 55, and 50 of the embodiment correspond to the thermal fluid passage of the present invention.

### BRIEF DESCRIPTION OF DRAWINGS

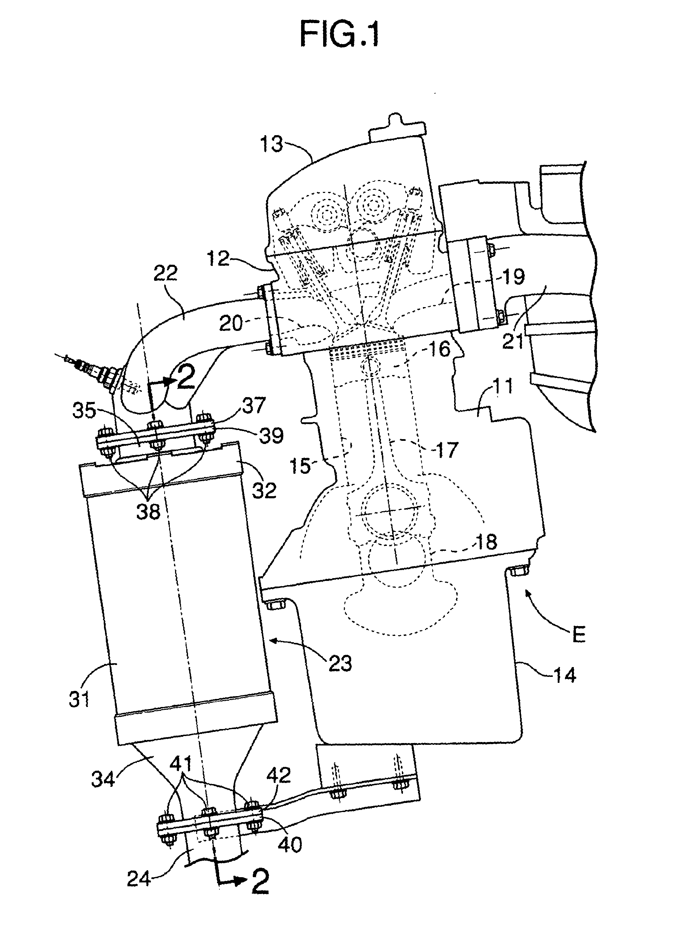

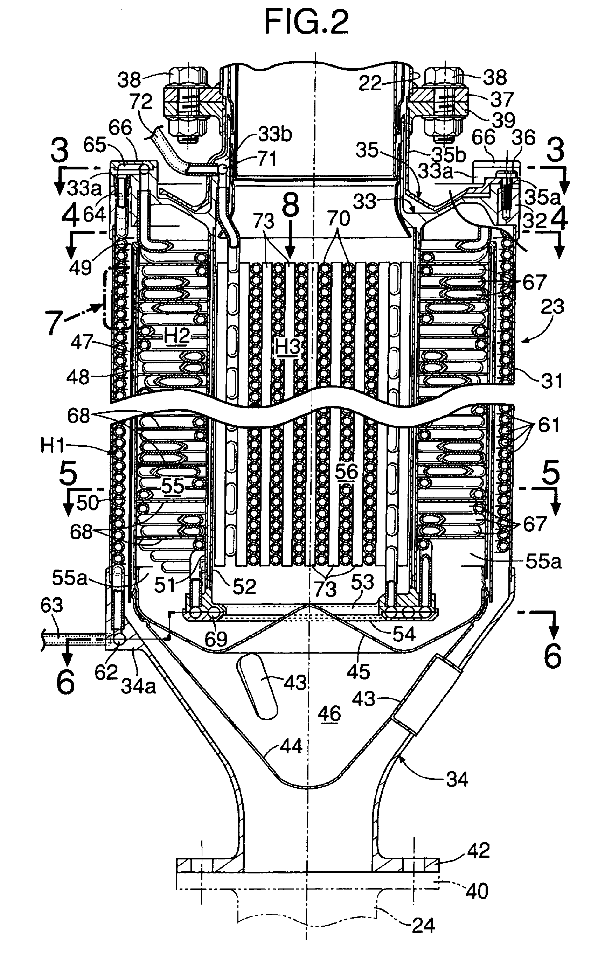

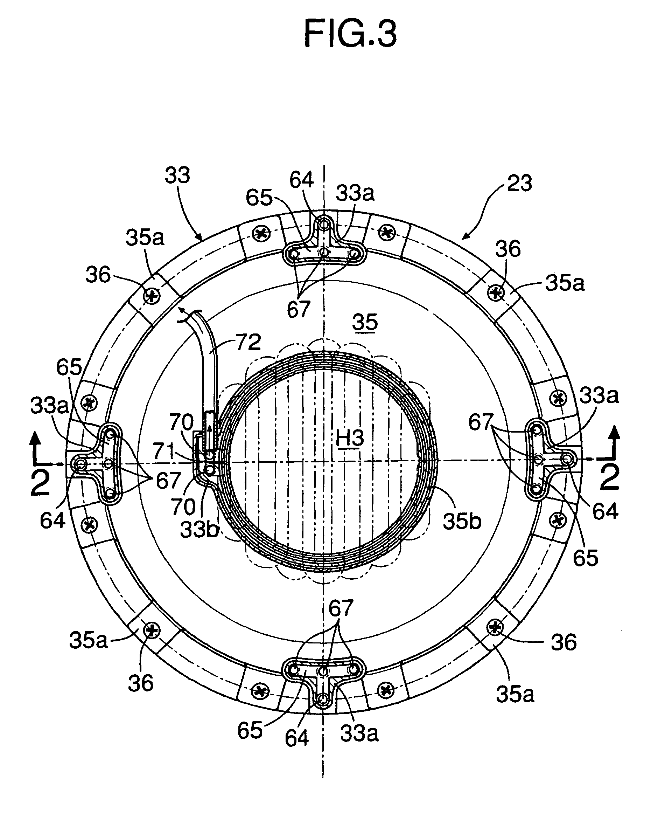

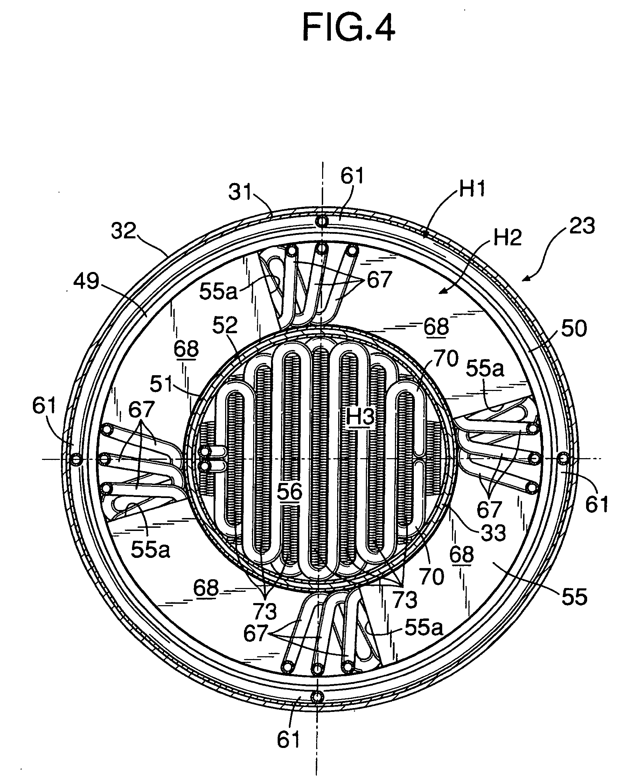

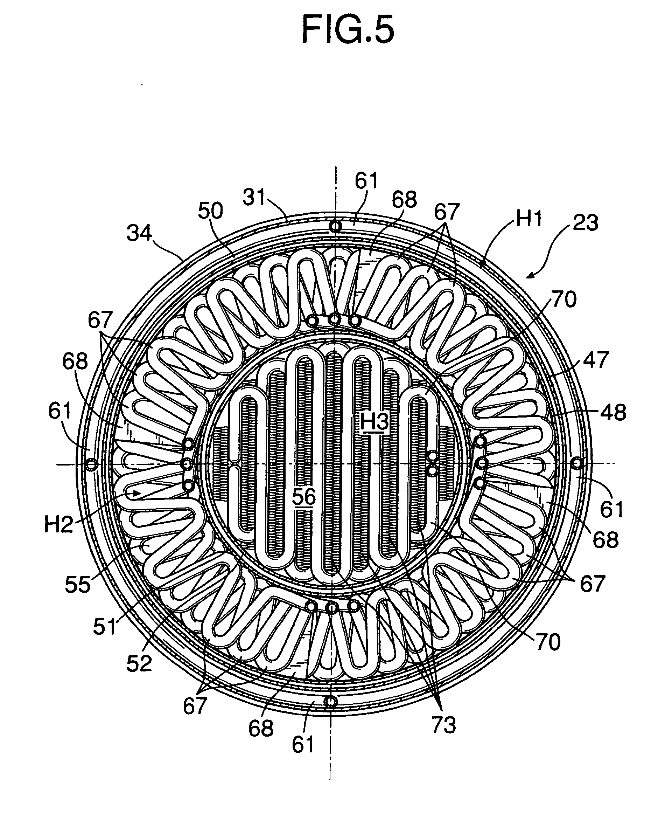

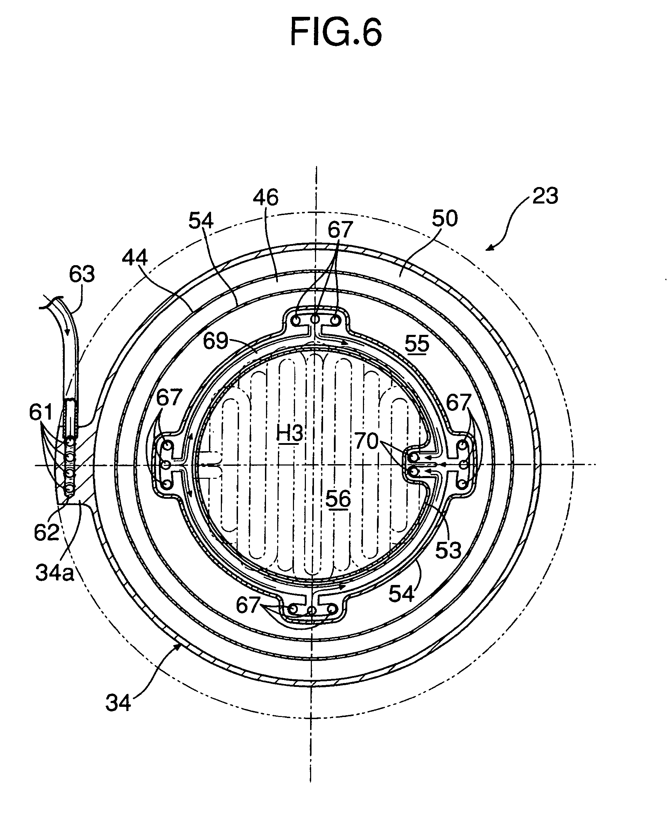

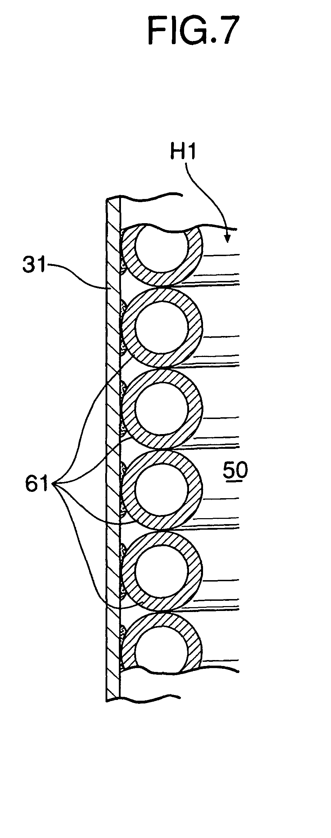

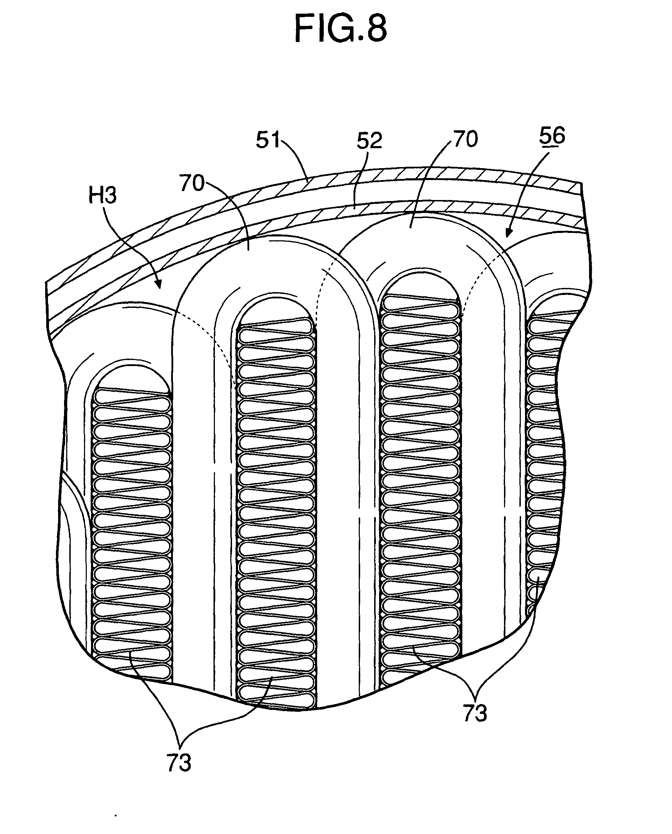

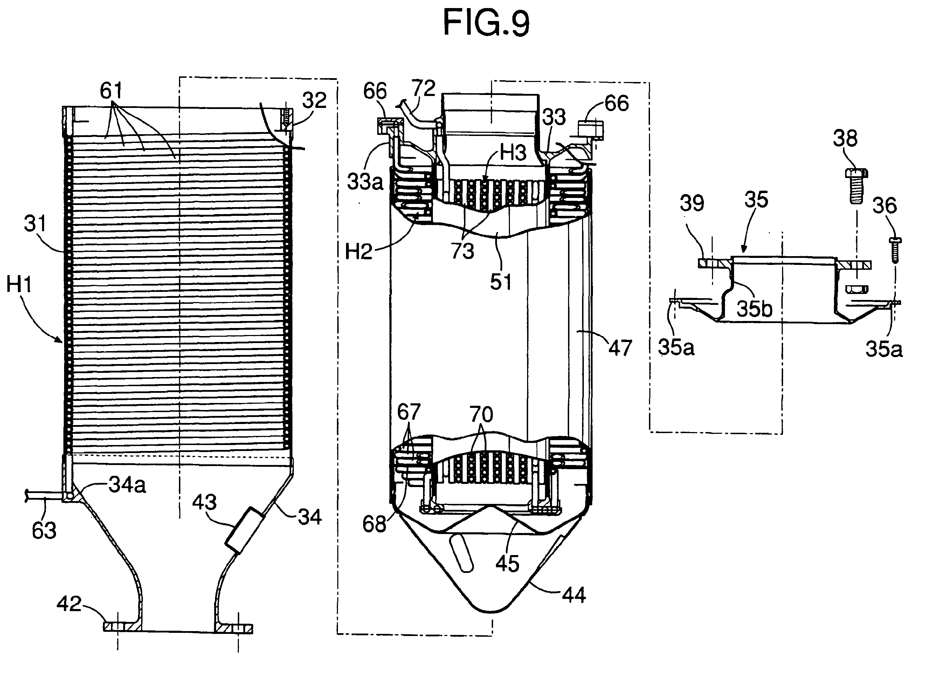

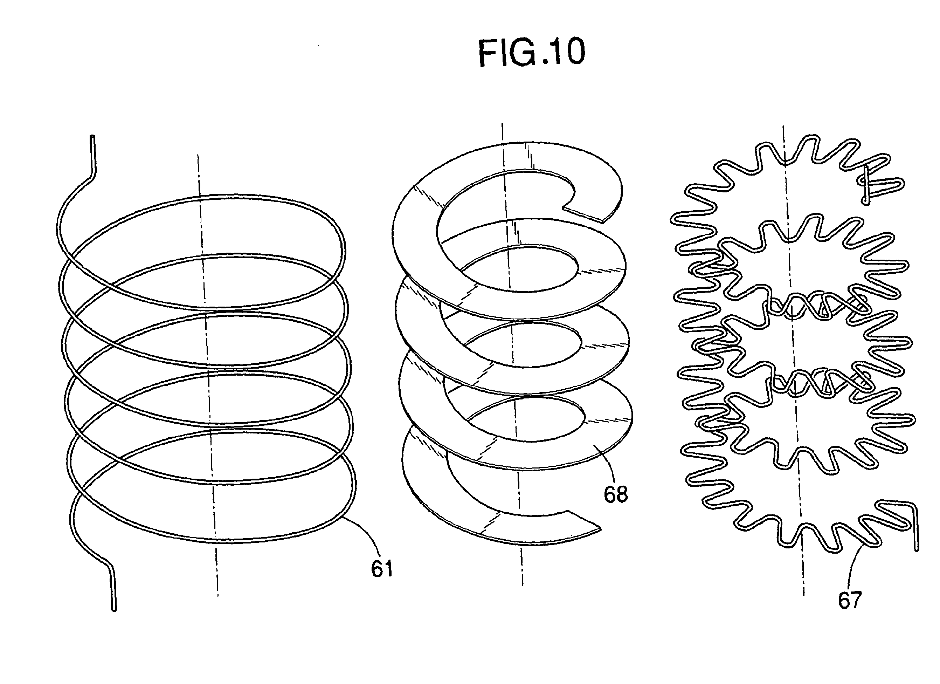

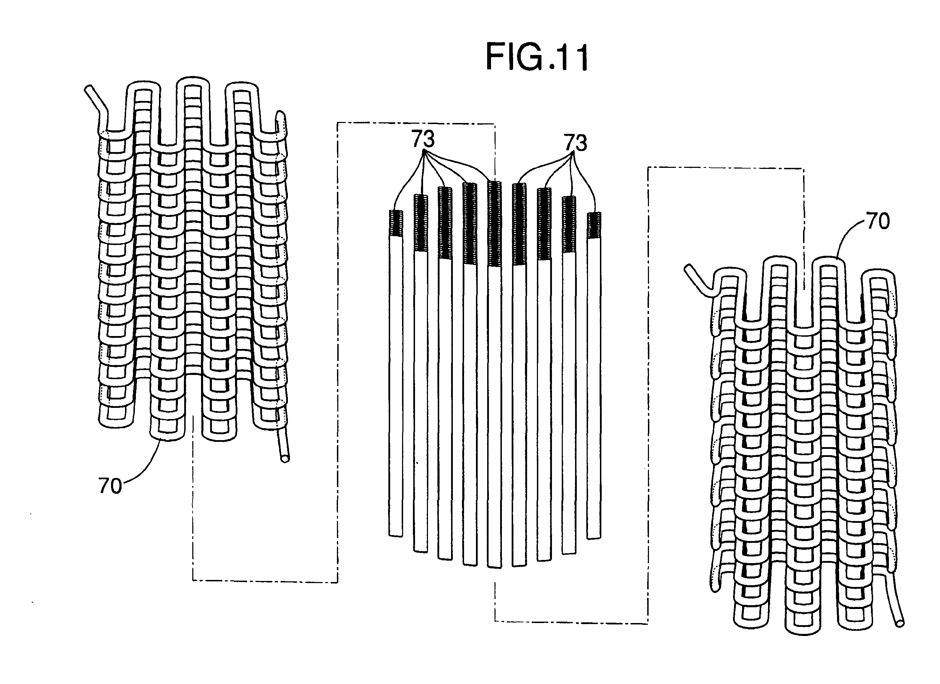

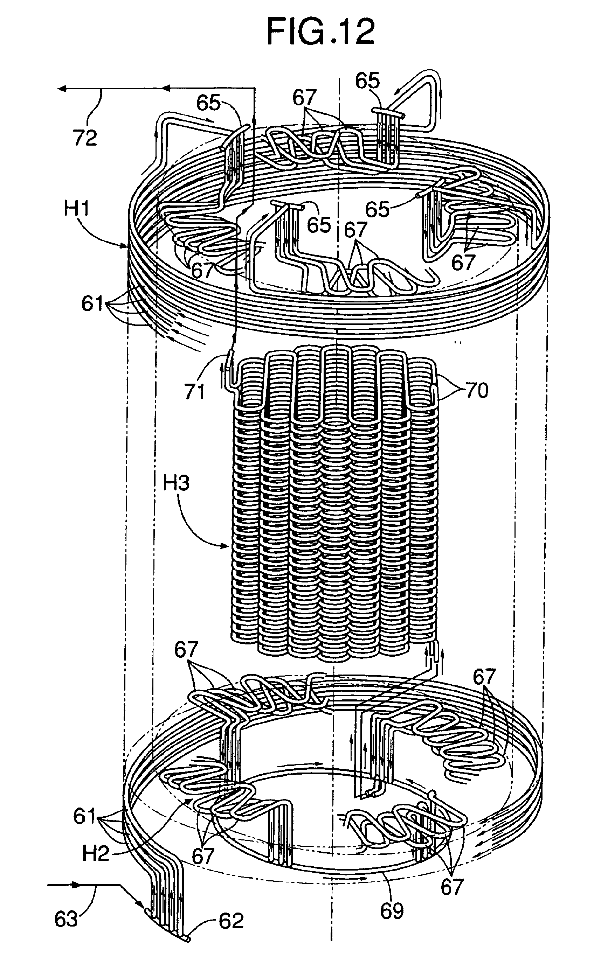

FIG. 1 to FIG. 12 illustrate one embodiment of the present invention, FIG. 1 is a front view of an internal combustion engine equipped with an evaporator, FIG. 2 is an enlarged sectional view along line 2-2 in FIG. 1 (a sectional view along line 2-2 in FIG. 3), FIG. 3 is a view from arrowed line 3-3 in FIG. 2, FIG. 4 is a sectional view along line 4-4 in FIG. 2, FIG. 5 is a sectional view along line 5-5 in FIG. 2, FIG. 6 is a sectional view along line 6-6 in FIG. 2 , FIG. 7 is an enlarged view of part 7 in FIG. 2, FIG. 8 is an enlarged view from arrow 8 in FIG. 2, FIG. 9 is an exploded view of the evaporator, FIG. 10 is an exploded perspective view of a heat transfer tube and a heat transfer plate of a first stage heat exchanger and a second stage heat exchanger, FIG. 11 is an exploded perspective view of a catalyst support and a heat transfer tube of a third stage heat exchanger, and FIG. 12 is a diagram showing the route of water flowing through the heat transfer tube.

### BEST MODE FOR CARRYING OUT THE INVENTION

One embodiment of the present invention is explained below with reference to the attached drawings.

As shown in FIG. 1, an in-line multicylinder internal combustion engine E includes a cylinder head 12 and a head cover 13 joined to an upper face of a cylinder block 11, and an oil pan 14 joined to a lower face of the cylinder block 11. Pistons 16 slidably fitted in cylinder bores 15 provided in the cylinder block 11 are connected to a crankshaft 18 via connecting rods 17. An intake manifold 21 and an exhaust manifold 22 are respectively connected to intake ports 19 and exhaust ports 20 formed in the cylinder head 12, and an exhaust pipe 24 is connected to the downstream side of the exhaust manifold 22 via an evaporator 23. The evaporator 23 forms a heat exchanger of the present invention, and generates high temperature, high pressure steam by heating water as a heat-absorbing medium with the heat of exhaust gas as a thermal fluid.

The structure of the evaporator 23 is explained below with reference to FIG. 1 to FIG. 12.

As shown in FIG. 1 to FIG. 3, and FIG. 9, the outer shell of the evaporator 23 includes a cylindrical center casing 31, an annular header 32 joined to the upper end of the center casing 31, an upper casing 33 joined to the upper end of the header 32, and a lower casing 34 joined to the lower end of the center casing 31. An upper cover 35 is fitted onto an upper face of the upper casing 33, and the upper cover 35 is fixed to the upper casing 33 by securing twelve radial projections 35a projectingly provided on the outer periphery of the upper cover 35 to the upper face of the upper casing 33 by means of bolts 36. Provided at the upper end of a cylindrical portion 35b of the upper cover 35 is a mounting flange 39, which is joined to a mounting flange 37 of the exhaust manifold 22 via a plurality of bolts 38. Further provided at the lower end of the lower casing 34 is a mounting flange 42, which is joined to a mounting flange 40 of the exhaust pipe 24 via a plurality of bolts 41.

A cone-shaped lower cover 44 is supported within the lower casing 34 via three struts 43, and an outer peripheral portion of a turn plate 45 is joined to an outer peripheral portion of the lower cover 44. A sealed space 46 is defined between the lower cover 44 and the turn plate 45. A cylindrical first dividing wall 47 and second dividing wall 48 are coaxially disposed inside the cylindrical center casing 31; lower ends of the first and second dividing walls 47 and 48 are joined to the outer peripheral portion of the lower cover 44 and the outer peripheral portion of the turn plate 45 respectively, and upper ends of the first and second dividing walls 47 and 48 are joined to a common annular connecting member 49. An annular third exhaust gas passage 50 is defined between the center casing 31 and the first dividing wall 47, and a very small gap is formed between the first and second dividing walls 47 and 48.

A cylindrical third dividing wall 51 and a cylindrical fourth dividing wall 52 are coaxially disposed inside the second dividing wall 48; upper ends of the third and fourth dividing walls 51 and 52 are joined to an inner end of the upper casing 33, and lower ends of the third and fourth dividing walls 51 and 52 are joined to annular headers 53 and 54. An annular second exhaust gas passage 55 is defined between the second dividing wall 48 and the third dividing wall 51, a cylindrical first exhaust gas passage 56 is defined inside the fourth dividing wall 52, and a very small gap is formed between the third and fourth dividing walls 51 and 52.

Exhaust gas flowing into the first exhaust gas passage 56 from the exhaust manifold 22 via the upper cover 35 therefore flows downward within the first exhaust gas passage 56, impinges on the turn plate 45, thus changing direction by 180°, and flows into the second exhaust gas passage 55. The exhaust gas that has flowed upward through the second exhaust gas passage 55 impinges on the upper casing 33, thus changing direction by 180°, flows downward through the third exhaust gas passage 50, and then merges into the exhaust pipe 24 via a space between the lower casing 34 and the lower cover 44.

Disposed in the third exhaust gas passage 50, the second exhaust gas passage 55, and the first exhaust gas passage 56 are a first stage heat exchanger H1, a second stage heat exchanger H2, and a third stage heat exchanger H3 respectively. While flowing sequentially within the first stage heat exchanger H1 → the second stage heat exchanger H2 → the third stage heat exchanger H3, water as the heat-absorbing medium carries out heat exchange with exhaust gas flowing sequentially within the first exhaust gas passage 56 → the second exhaust gas passage 55 → the third exhaust gas passage 50, and turns into high temperature, high pressure steam. In this way, by making the direction of flow of exhaust gas opposite to the direction of flow of water it is possible to ensure a sufficient temperature difference between the exhaust gas, whose temperature gradually decreases due to the heat exchange, and the water, whose temperature gradually increases due to the heat exchange, in all the regions of the first stage heat exchanger H1 to the third stage heat exchanger H3, thereby improving the heat exchange efficiency.

The structure of the first stage heat exchanger H1, which is disposed within the third exhaust gas passage 50, is now explained.

A heat transfer member of the first stage heat exchanger H1 is a combination of four heat transfer tubes 61; entrance ends thereof are connected to a water supply pipe 63 via an arc-shaped branch passage 62 provided in a header portion 34a of the lower casing 34 (see FIG. 2, FIG. 6, and FIG. 12). Exit ends of the four heat transfer tubes 61, which are integrally fixed by brazing (see FIG. 7) to an inner face of the center casing 31, communicate with four T-shaped branch passages 65 (see FIG. 2, FIG. 3, and FIG. 12), which are formed in four projections 33a projecting from the upper end of the upper casing 33, via the header 32 and joints 64 provided on the upper end of the center casing 31. An orifice at the upper end of each of the branch passages 65 is covered by a cover member 66 (see FIG. 2).

The structure of the second stage heat exchanger H2, which is disposed within the second exhaust gas passage 55, is now explained.

The heat transfer member of the second stage heat exchanger is formed from a total of twelve heat transfer tubes 67 and four heat transfer plates 68. The total of twelve heat transfer tubes 67 are grouped into four sets each including three of the heat transfer tubes 67, and entrance ends of the three heat transfer tubes 67 of each set are connected to a corresponding one of the four T-shaped branch passages 65. The three heat transfer tubes 67, each of which is bent in an undulating shape, are stacked so as to be out of phase with each other, and disposed together within the annular second exhaust gas passage 55 in a spirally wound state as a whole (see FIG. 5, FIG. 10, and FIG. 12). The four sets of heat transfer tubes 67 are partitioned from each other by the four spiral-shaped heat transfer plates 68. Exit ends of the twelve heat transfer tubes 67 are connected in groups of three to four locations in the circumferential direction of a circular collecting passage 69 formed on mating faces of the headers 53 and 54 (see FIG. 6).

As is clear from FIG. 4, inlets 55a of the second exhaust gas passage 55, in which the second stage heat exchanger H2 is disposed, are defined by end portions of the four heat transfer plates 68. In this way, by reducing the exhaust gas passage cross-sectional area at the inlets 55a of the second exhaust gas passage 55 it is possible to ensure a sufficient flow rate of the exhaust gas within the second stage heat exchanger H2, thereby contributing to an improvement of the heat exchanger efficiency.

The structure of the third stage heat exchanger H3, which is disposed within the first exhaust gas passage 56, is now explained.

The heat transfer member of the third stage heat exchanger is formed from two heat transfer tubes 70. Entrance ends of the heat transfer tubes 70 are connected to the circular collecting passage 69 formed on the mating faces of the headers 53 and 54 (see FIG. 6 and FIG. 12), and exit ends of the heat transfer tubes 70 are collected in an arc-shaped collecting passage 71 (see FIG. 2, FIG. 3, and FIG. 12) formed in a header portion 33b of the upper casing 33 and then connected to a steam discharge pipe 72. Each of the heat transfer tubes 70 is bent in a zigzag shape within one plane, and then bent in a zigzag shape within an adjacent plane, and so on sequentially, and the two heat transfer tubes 70 are combined so as to mesh with each other. A plurality of flat catalyst support sheets 73 are contained in spaces between the two heat transfer tubes 70 thus combined. Each of the catalyst supports 73 is formed from a bent sheet having a large surface area (see FIG. 8), and an exhaust gas purification catalyst is supported on the surface thereof.

As is clear from FIG. 12, water supplied from a water supply pump via the water supply pipe 63 turns into high temperature, high pressure steam after flowing through the branch passage 62 → the four heat transfer tubes 61 of the first stage heat exchanger H1 → the four branch passages 65 → the twelve heat transfer tubes 67 of the second stage heat exchanger H2 → the annular collecting passage 69 → the two heat transfer tubes 70 of the third stage heat exchanger H3 → the collecting passage 71, and is discharged into the steam discharge pipe 72.

The exhaust gas discharged from the exhaust manifold 22 of the internal combustion engine E first flows downward in the first exhaust gas passage 56 of the evaporator 23, and carries out heat exchange with the third stage heat exchanger H3 provided therein. Since the first exhaust gas passage 56, in which the third stage heat exchanger H3 is disposed, is a linear passage having a uniform circular cross section, and the catalyst supports 73, which are integral with the third stage heat exchanger H3, are plate-shaped members disposed in parallel to the direction of flow of the exhaust gas, the flow of exhaust gas therethrough becomes laminar. This enables the pressure loss of the exhaust gas to be minimized and the exhaust gas to be supplied to the second stage heat exchanger H2 at a high flow rate. Moreover, since the heat of reaction generated by a catalytic reaction involving the exhaust gas purification catalyst is absorbed by water flowing through the third stage heat exchanger H3, the energy recovery efficiency is further improved.

The exhaust gas discharged from the first exhaust gas passage 56 is guided by the turn plate 45 so as to turn through 180°, and flows upward through the annular second exhaust gas passage 55, which surrounds the outside of the first exhaust gas passage 56. The turn plate 45 has a shape that is suitable for providing a smooth U-turn for the flow of exhaust gas. Since the second stage heat exchanger H2, which is disposed in the second exhaust gas passage 55, includes four spiral passages defined by the four heat transfer plates 68, the flow path for exhaust gas flowing therein becomes long, and the direction of flow of the exhaust gas is deflected, thus resulting in spiral flow. Moreover, since the heat transfer tubes 67 of the second stage heat exchanger H2 have a structure in which a tube bent into undulations is wound in a spiral shape, not only is it possible to compactly arrange the heat transfer tubes 67, which have a long overall length, but it is also possible to make uniform contact with the exhaust gas because the phases of the undulations of adjacent heat transfer tubes 67 are displaced; moreover, the contact area with the exhaust gas can be increased, and a turbulent flow can be imparted effectively to the exhaust gas.

As hereinbefore described, since both the heat transfer plates 68 and the heat transfer tubes 67 contribute to the heat exchange with the exhaust gas, the heat transfer area density (heat transfer area/volume) of the second stage heat exchanger H2 is increased, the heat exchange efficiency is accordingly increased and, in particular, since the flow of exhaust gas is spiral and turbulent, it is possible to contact the exhaust gas sufficiently with the heat transfer plates 68 and the heat transfer tubes 67, thereby increasing the heat exchange efficiency. Furthermore, since the cross-sectional area of the exhaust gas passage is reduced at the four inlets 55a of the second exhaust gas passage 55 (see FIG. 4), the exhaust gas having its flow rate thus increased flows into the second exhaust gas passage 55, thereby further improving the heat exchange efficiency.

The exhaust gas that has reached the upstream end of the second exhaust gas passage 55 is guided by the upper casing 33 so as to turn through 180°, and flows downward through the annular third exhaust gas passage 50, which surrounds the outside of the second exhaust gas passage 55. After the exhaust gas carries out heat exchange with water flowing through the four spirally wound heat transfer tubes 61 of the first stage heat exchanger H1 disposed in the third exhaust gas passage 50, it is discharged to the exhaust pipe 24 via a passage between the lower casing 34 and the lower cover 44.

Since the four heat transfer tubes 61 of the first stage heat exchanger H1 are integrally fixed by brazing to the inner face of the center casing 31, the heat transfer tubes 61 and the center casing 31 reinforce each other, thus increasing the overall rigidity of the evaporator 23. In particular, since the center casing 31 is cylindrical and the heat transfer tubes 61 are spiral, the rigidity against an external force can be improved compared with a case in which the casing and the tubes have a flat face or a linear section. Moreover, since the diameter of the cylindrical center casing 31 and the winding diameter of the spirally wound heat transfer tubes 61 are substantially the same, and outer faces of the heat transfer tubes 61 are brazed to the inner face of the center casing 31 in line contact, it is possible to maximize the area for brazing, thereby securely integrating the center casing 31 and the heat transfer tubes 61. In this way, since the center casing 31 and the heat transfer tubes 61 are integrated and can reinforce each other, the thickness of the center casing 31 can be reduced, thus contributing to a lightening of the weight of the evaporator 23.

As hereinbefore described, since the first exhaust gas passage 56, through which high temperature exhaust gas flows, the second exhaust gas passage 55, through which medium temperature exhaust gas flows, and the third exhaust gas passage 50, through which low temperature exhaust gas flows, are arranged sequentially from the radially inner to outer sides of the evaporator 23, heat escaping from the first exhaust gas passage 56 to the radially outer side can be recovered by the second exhaust gas passage 55, and heat escaping from the second exhaust gas passage 55 to the radially outer side can be recovered by the first exhaust gas passage 56, thereby enabling the thermal energy of the exhaust gas to be recovered fully.

In particular, since the third exhaust gas passage 50, which is disposed along the inner periphery of the center casing 31, is positioned on the most downstream side in the direction of flow of exhaust gas, and the exhaust gas flowing therethrough has a relatively low temperature, the third exhaust gas passage 50 can function as a heat-insulating layer for absorbing and blocking heat escaping from the interior of the evaporator 23, which reaches a high temperature, thereby minimizing the escape of heat from the center casing 31 to the atmosphere. Furthermore, since the heat transfer tubes 61 of the first heat exchanger H1, which is disposed along the inner periphery of the center casing 31, are positioned on the most upstream side in the direction of flow of water, and the water flowing therethrough has a relatively low temperature, the heat transfer tubes 61 can function as a heat-insulating layer for absorbing and blocking the heat escaping from the interior of the evaporator 23, which reaches a high temperature, thereby minimizing the escape of heat from the center casing 31 to the atmosphere.

Moreover, since the total number of heat transfer tubes 61, 67, and 70 used in the evaporator 23 is 4 + 12 + 2 = 18, not only is it possible to greatly reduce the number of components compared with a conventional evaporator where several hundred heat transfer tubes are employed, but it is also possible to reduce the work of brazing these heat transfer tubes 61, 67, and 70 to the header, thus contributing to a reduction in cost. Furthermore, since the dimensions of the header are reduced because a smaller number of the heat transfer tubes 61, 67, and 70 are used, water can be distributed uniformly to each of the heat transfer tubes 61, 67, and 70, thus preventing any damage due to heating while empty.

Although an embodiment of the present invention is explained in detail above, the present invention can be modified in a variety of ways without departing from the spirit and scope of the present invention.

For example, in the embodiment the exhaust gas of the internal combustion engine E is illustrated as the thermal fluid and water is illustrated as the heat-absorbing medium, but any other appropriate substances can be employed as the thermal fluid and the heat-absorbing medium.

Furthermore, when a bypass passage connecting the downstream end of the first exhaust gas passage 56 to the exhaust pipe 24 is provided by utilizing the space 46 surrounded by the lower cover 44 and the turn plate 45, and this bypass passage is provided with an open/close valve, opening the open/close valve when the internal pressure of the evaporator 23 is high enables the pressure to escape.

Moreover, an oxygen concentration sensor, etc. can be mounted by utilizing the strut 43 supporting the lower cover 44 on the lower casing 34.

### INDUSTRIAL APPLICABILITY

As hereinbefore described, although the heat exchanger in accordance with the present invention is one that is suitable for application to carrying out heat exchange between water and the exhaust gas of an internal combustion engine, it can be applied to any purpose.

## Claims

1. A heat exchanger that has a heat transfer member (61, 67, 68, 70) disposed so as to be in contact with a thermal fluid flowing within a thermal fluid passage (50, 55, 56) while the temperature of the thermal fluid decreases, and that recovers the thermal energy of the thermal fluid with a heat-absorbing medium via the heat transfer member (61, 67, 68, 70) by making the heat-absorbing medium flow within the heat transfer member (61, 67, 68, 70) in a direction opposite to the flow of the thermal fluid,
**characterized in that** the heat transfer member (67, 68) includes a guide member that deflects the flow of the thermal fluid, and a disturbing member that agitates the flow of the thermal fluid that has been deflected by the guide member.

2. The heat exchanger according to Claim 1, wherein the thermal fluid passage (50, 55, 56) is divided, from the upstream side toward the downstream side in the direction of flow of the thermal fluid, into a high temperature region, a medium temperature region, and a low temperature region, the temperature and the flow rate of the thermal fluid gradually decrease while flowing from the high temperature region to the low temperature region through the medium temperature region, and the guide member (68) and the disturbing member (67) are disposed at least in the medium temperature region.

3. The heat exchanger according to Claim 2, wherein the passage cross-sectional area of the thermal fluid passage (55) in the medium temperature region is constricted at an entrance (55a) thereof.

4. The heat exchanger according to either Claim 2 or Claim 3, wherein the thermal fluid passage (55) has an annular shape in the medium temperature region, the guide member (68) is formed from a spiral heat transfer plate disposed within the annular thermal fluid passage (55), and the disturbing member (67) is formed by winding a plurality of undulating heat transfer tubes in a spiral shape so as to follow the guide member (68), the plurality of undulating heat transfer tubes being stacked out of phase.

5. The heat exchanger according to any one of Claim 2 to Claim 4, wherein the flow of thermal fluid through the high temperature region is laminar.

6. The heat exchanger according to any one of Claim 2 to Claim 5, wherein the medium temperature region is arranged so as to cover the radially outer side of the high temperature region, and the low temperature region is arranged so as to cover the radially outer side of the medium temperature region.

7. The heat exchanger according to any one of Claim 1 to Claim 6, wherein the thermal fluid is exhaust gas of an internal combustion engine (E), and the heat exchanger is an evaporator (23) that evaporates the heat-absorbing medium with the heat of the exhaust gas.

8. A heat exchanger that carries out heat exchange between a thermal fluid flowing through a thermal fluid passage (50, 55, 56) formed in the interior of a casing (31) and a heat-absorbing medium flowing within heat transfer members (61, 67, 70) disposed in the thermal fluid passage (50, 55, 56),
**characterized in that** the heat transfer member (61) positioned on the radially outermost side is fixed along an inner face of the casing (31).

9. The heat exchanger according to Claim 8, wherein the thermal fluid passage (50) formed along the inner face of the casing (31) is in a downstream section in the direction of flow of the thermal fluid.

10. The heat exchanger according to either Claim 8 or Claim 9, wherein the heat transfer member (61) secured along the inner face of the casing (31) is in an upstream section in the direction of flow of the heat-absorbing medium.

11. The heat exchanger according to any one of Claim 8 to Claim 10, wherein an outer face of the heat transfer member (61), which is wound in a spiral shape having substantially the same diameter as that of the casing (31), is fixed along the inner face of the casing (31), which is formed in a cylindrical shape.

12. The heat exchanger according to any one of Claim 8 to Claim 11, wherein the thermal fluid is exhaust gas of an internal combustion engine (E), and the heat exchanger is an evaporator (23) that evaporates the heat-absorbing medium with the heat of the exhaust gas.
